# FASCICULE DE BREVET EUROPEEN

(11) **EP 2 391 535 B1**
(45) Date de publication et mention de la délivrance du brevet: **06.03.2019**
(21) Numéro de dépôt: 10707601.0
(22) Date de dépôt: 27.01.2010
(51) Int. Cl.: B64C 1/18

(54) **AÉRONEF COMPRENANT DES TRAVERSES DE FIXATION DES SIÈGES**
FLUGZEUG MIT QUERTRÄGERN ZUR BEFESTIGUNG VON SITZEN
AIRCRAFT INCLUDING CROSSBEAMS FOR ATTACHING SEATS

(30) Priorité: 29.01.2009 FR 0950556
(43) Date de publication de la demande: 07.12.2011
(73) Titulaire: AIRBUS OPERATIONS (S.A.S), 31060 Toulouse (FR)
(72) Inventeur: DEMONT, Benoît, F-31820 Pibrac (FR); De CONTO, Sébastien, F-31530 Bretx (FR); GRILLON, Rolland, F-31170 Tournefeuille (FR)
(74) Mandataire: Gicquel, Olivier Yves Gérard
(86) Numéro de dépôt international: PCT/FR2010/050128
(87) Numéro de publication internationale: WO 2010/086554

(56) Documents cités:
- EP-A- 1 564 141
- FR-A- 2 887 849
- FR-A- 2 900 125
- US-A- 5 083 727
- US-A1- 2007 080 258

## Description

L'invention concerne les aéronefs, notamment les avions. Elle concerne plus précisément l'architecture du fuselage.

Il est souhaitable que les aménagements de cabine d'un avion de transport civil présentent une certaine flexibilité. Ainsi, les sièges de passager étant supportés par des rails longitudinaux, il est avantageux de pouvoir modifier la position transversale des rails par rapport au plan longitudinal vertical médian de la cabine.

Sur une section courante du fuselage, cela ne soulève pas de difficulté particulière. En effet, les rails reposent classiquement sur des traverses qui s'étendent perpendiculairement à la direction longitudinale du fuselage et sont supportées sur des parties latérales de ce dernier. Quelle que soit donc la position que l'on souhaite donner aux rails de sièges, les rails trouvent un appui sur la traverse.

Il en va différemment sur certaines sections particulières du fuselage. C'est le cas ainsi du caisson central de voilure qui s'étend dans le fuselage au droit des ailes. C'est également le cas de la case de train d'atterrissage principal dans laquelle se loge le train supportant directement le fuselage. Dans ces deux zones particulières, la structure du fuselage présente des poutres s'étendant suivant la direction longitudinale du fuselage: Il s'agit des poutres sur le caisson central de voilure et des portiques dans la case de train principal. Dans ces deux zones, l'architecture du fuselage ainsi que les déformations transversales que ce dernier est susceptible de subir interdisent la mise en place des traverses précitées. C'est pourquoi, dans ces zones, les rails sont portés par des bielles, elles-mêmes portées par les poutres longitudinales. C'est donc la position de ces dernières qui conditionne la position des rails en direction transversale, laquelle ne peut donc pas être choisie librement.

Cette architecture interdit également des modifications ultérieures de la position des rails. Ainsi, les clients tels que les compagnies aériennes ne peuvent pas personnaliser la cabine dans ces zones.

Le document US 5,083,727 décrit toutes les caractéristiques techniques du préambule de la revendication 1.

Un but de l'invention est donc d'améliorer la flexibilité des aménagements de la cabine, notamment au niveau du caisson central de voilure et de la case de train principal. A cet effet, on prévoit selon l'invention un aéronef selon la revendication 1.

Il s'agit donc de traverses partielles ou de "mini-traverses" qui vont présenter une inertie réduite.

Ainsi, au niveau des zones présentant les mini-traverses, les rails de sièges peuvent occuper un grand nombre de positions transversales puisqu'ils demeurent en appui sur les mini-traverses. On donne donc, y compris dans ces zones, une grande flexibilité aux aménagements de la cabine. C'est ainsi qu'on peut offrir aux compagnies aériennes des versions de l'aéronef ayant une densité de sièges accrue, par exemple un passager supplémentaire par rangée. A titre d'exemple, cette solution permet de proposer sur un appareil long courrier à deux couloirs de cabine une configuration trois-quatre-trois, soit dix sièges suivant la direction transversale, ou bien une configuration trois-cinq-trois, soit onze sièges suivant cette direction. On peut donc proposer aux compagnies un avion à masse marchande optionnellement augmentée de 10 % à faible coût.

A la différence des traverses connues précitées, les mini-traverses trouvent dans les poutres de multiples appuis, notamment lorsqu'elles sont positionnées dans le caisson central de voilure ou la case de train principal, ce qui permet de disposer d'une traverse dont la longueur est très inférieure à la dimension transversale du fuselage. Ainsi, à la différence des traverses connues précitées, il n'est pas nécessaire que ces mini-traverses soient en appui sur des parties latérales de la structure du fuselage.

Ces mini-traverses permettent en retour d'optimiser la position des poutres longitudinales qui les supportent puisqu'il n'est plus nécessaire de choisir la position de ces dernières en tenant compte de la position future des rails de sièges. On optimise donc la masse de la structure du fuselage, en particulier dans le caisson central de voilure.

Les mini-traverses préservent en outre la souplesse transversale du fuselage au niveau du caisson central de voilure et de la case de train principal, en particulier pour des flexions autour d'un axe parallèle à l'axe longitudinal du fuselage. C'est ainsi que la souplesse donnée initialement par les bielles sur les avions connus se trouve conservée.

Avantageusement, chaque traverse présente une liaison à chacune des poutres qui la supporte, la ou chaque liaison comprenant au moins une articulation autour d'au moins un axe parallèle à la direction de la traverse, de préférence deux articulations autour de deux axes respectifs parallèles à la direction de la traverse. Cette souplesse dans la direction de l'axe longitudinal du fuselage permet une meilleure distribution des efforts appliqués au plancher dans la structure de l'aéronef.

Par ailleurs, on sait que, sous l'effet de la pression d'une part et de la flexion de la voilure d'autre part, les portiques se trouvent entraînés par les poutres du caisson central de voilure et ont de ce fait tendance à se déformer en pivotant autour de l'axe longitudinal X du fuselage et en se rapprochant les uns des autres. La liaison entre les poutres et chaque mini-traverse transmet les efforts verticaux, Mais elle ne devrait pas transmettre des efforts qui seraient dus à des déplacements parasites tels que la rotation de la poutre.

Dans les avions de l'art antérieur précité, ce problème ne se pose pas car les rails de sièges s'étendent suivant l'axe X et sont liés aux poutres du caisson central qui s'étendent elles-mêmes selon l'axe X. Il ne peut donc pas y avoir de transmission de couple de flexion entre les deux éléments autour de cet axe. Ainsi, il est souhaitable que la liaison entre les traverses et la structure sous-jacente transmette les efforts verticaux du plancher à cette structure mais pas qu'elle transmette au plancher des moments de flexion autour de l'axe X.

A cet effet, on prévoit que la liaison comprend au moins une articulation autour d'un axe parallèle à la direction longitudinale de l'aéronef.

Ainsi, l'articulation de la liaison permet de répondre de façon satisfaisante à ce problème en empêchant la transmission depuis les poutres jusqu'aux traverses des moments de flexion autour de l'axe X.

Avantageusement, la liaison comprend un lien rotulé.

Par ailleurs, il existe de fortes contraintes d'encombrement pour le logement des trains d'atterrissage et la préservation du volume de la cabine. C'est pourquoi la hauteur de l'ensemble formé par les rails de sièges, les traverses, les liaisons et les poutres est limitée. On souhaite donc rendre cet ensemble le plus compact possible sans compromettre les fonctions et les caractéristiques de ces composants, en particulier l'inertie des poutres et des mini-traverses.

A cette fin, on prévoit que la liaison est agencée de sorte que le ou les axes s'étendent sous une face supérieure de la poutre.

Face à ce même problème, dans un autre mode de réalisation, on prévoit que la liaison est agencée de sorte que la traverse est reliée à la poutre par l'intermédiaire d'une paroi supérieure de la traverse, la liaison s'étendant à l'intérieur de la traverse.

De préférence, la liaison comprend deux pièces intermédiaires s'étendant respectivement en regard de faces opposées respectives de la poutre et rigidement fixées l'une à l'autre au moyen de deux articulations.

D"autres caractéristiques et avantages de l'invention apparaîtront encore dans la description suivante de quatre modes de réalisation donnés à titre d'exemples non limitatifs en référence aux dessins annexés sur lesquels :
- la figure 1 est une vue de côté d'un aéronef selon l'invention ;
- la figure 2 est une vue du fuselage de l'aéronef de la figure 1 en section verticale perpendiculaire à l'axe longitudinal du fuselage ;
- la figure 3 est une vue en perspective d'une partie de la structure interne du fuselage de l'aéronef de la figure 1 au niveau du caisson central de voilure et de la case de train principal 5;
- la figure 4 est une vue en élévation du détail C de l'aéronef de la figure 3 montrant l'agencement des mini-traverses sur les poutres dans un premier mode de réalisation de l'invention ;
- la figure 5 est une vue à plus grande échelle du détail D de la figure 4 ;
- la figure 6 est une vue en perspective des éléments formant la liaison au niveau du détail D ;
- les figures 7, 8 et 9 sont des figures respectivement analogues aux figures 4, 5 et 6 illustrant un deuxième mode de réalisation ;
- la figure 10 est une vue en perspective de la liaison entre une mini-traverse et une poutre dans un troisième mode de réalisation de l'invention ;
- la figure 11 est une vue partielle en élévation des éléments de la figure 10 ;
- les figures 12 et 13 sont des vues en coupe respectivement suivant les plans XII-XII et XIII-XIII des éléments de la figure 11 ; et
- les figures 14 à 17 sont des vues analogues respectivement aux figures 10 à 13 illustrant un quatrième mode de réalisation.

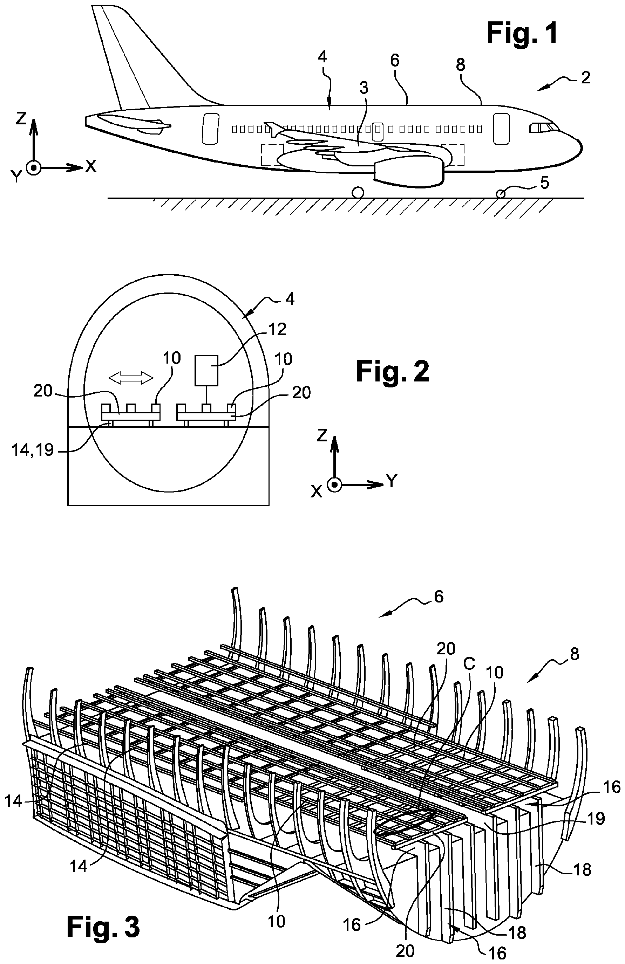

La figure 1 illustre un aéronef 2 selon l'invention qui est en l'espèce un avion comportant un fuselage 4, un train principal d'atterrissage 5 et deux ailes 3.

On a illustré aux figures 2 et 3 la structure du fuselage au niveau du caisson central de voilure 6, s'étendant au droit des ailes entre ces dernières, et de la case de train principal 8 s'étendant à l'arrière du caisson 6.

On utilise dans la suite le repère classique XYZ dans lequel X désigne la direction longitudinale de l'avion et du fuselage, Y la direction transversale horizontale et Z la direction verticale.

Dans le fuselage, l'avion 2 comprend des rails 10 supportant des sièges de passager 12. Les rails s'étendent parallèlement les uns aux autres et à la direction X, dans un même plan parallèle aux directions X et Y. Les rails d'une même section dans un plan parallèle au plan YZ sont espacés les uns des autres.

Le caisson central de voilure 6 comprend des poutres 14 s'étendent parallèlement les unes aux autres et à la direction X, dans un même plan parallèle aux directions X et Y. Les poutres d'une même section dans un plan parallèle au plan YZ sont espacées les unes des autres.

La case de train principal 8 comprend des raidisseurs plans 16 constitués de l'assemblage d'une poutre verticale 18 et d'une poutre horizontale 19 s'étendant chacun dans un plan parallèle au plan XZ et formant un portique. Les poutres 19 s'étendent suivant la direction longitudinale X parallèlement les unes aux autres. Elles sont inscrites dans un même plan général horizontal parallèle aux directions X et Y bien que chaque poutre 19 présente une hauteur suivant la direction Z supérieure à son épaisseur suivant la direction Y. Les poutres 19 d'une même section dans un plan parallèle au plan YZ sont espacées les unes des autres.

Les rails 10 et les poutres 14 et 19 sont rectilignes.

La structure du fuselage comprend des traverses rectilignes 20 formées en l'espèce par des poutres allongées suivant la direction transversale Y et parallèles entre elles. Les traverses sont toutes disposées dans un même plan horizontal parallèle aux directions X et Y. Les traverses 20 forment des rangées de traverses alignées, les rangées s'étendant suivant la direction longitudinale X. Dans chaque rangée, les traverses 20 sont en outre alignées suivant la direction longitudinale des traverses. On voit ainsi que, dans la section du fuselage illustrée à la figure 2, deux traverses se succèdent suivant la direction Y. Bien entendu, on pourrait prévoir que le nombre de traverses qui se succèdent, c'est-à-dire le nombre de rangées, est plus élevé, et par exemple égal à trois, quatre, cinq, etc. Les traverses sont espacées les unes des autres en direction longitudinale X ainsi qu'en direction transversale Y. Les traverses sont également espacées des extrémités latérales du fuselage et de la structure de ce dernier. En l'espèce, les traverses ne sont donc pas portées par les parties latérales de la structure du fuselage.

Chaque traverse 20 supporte certains des rails 10 qui se succèdent dans une même section suivant la direction transversale Y, mais pas tous les rails qui se succèdent ainsi.

Sur la figure 2, on voit par exemple que si le nombre de rails qui se succèdent en direction transversale est fixé à six, chacune des deux traverses 20 supporte seulement trois des six rails. De plus, chacun des rails 10 est supporté par une traverse et une seule dans une section donnée. Les rails supportés par une même traverse s'étendent à distance les uns des autres.

De façon similaire, chaque traverse 20 est supportée par certaines des poutres 14, 19 qui se succèdent suivant la direction Y dans la section considérée, mais pas par toutes les poutres de cette section. En l'espèce, chaque traverse repose sur seulement deux des poutres 14, 19 parmi les quatre poutres qui se succèdent suivant la direction transversale Y dans la section illustrée à la figure 2. On pourrait prévoir que le nombre de poutres supportant chaque traverse est supérieur à deux, et par exemple égal à trois, quatre ou cinq, etc. Dans une même section, chacune des poutres 14, 19 supporte une seule des traverses 20 de la section.

Dans l'illustration plus détaillée de la figure 3, chacune des deux mini-traverses 20 d'une section supporte cinq des dix rails 10 de la section et est supportée par trois des six poutres 19 de la section.

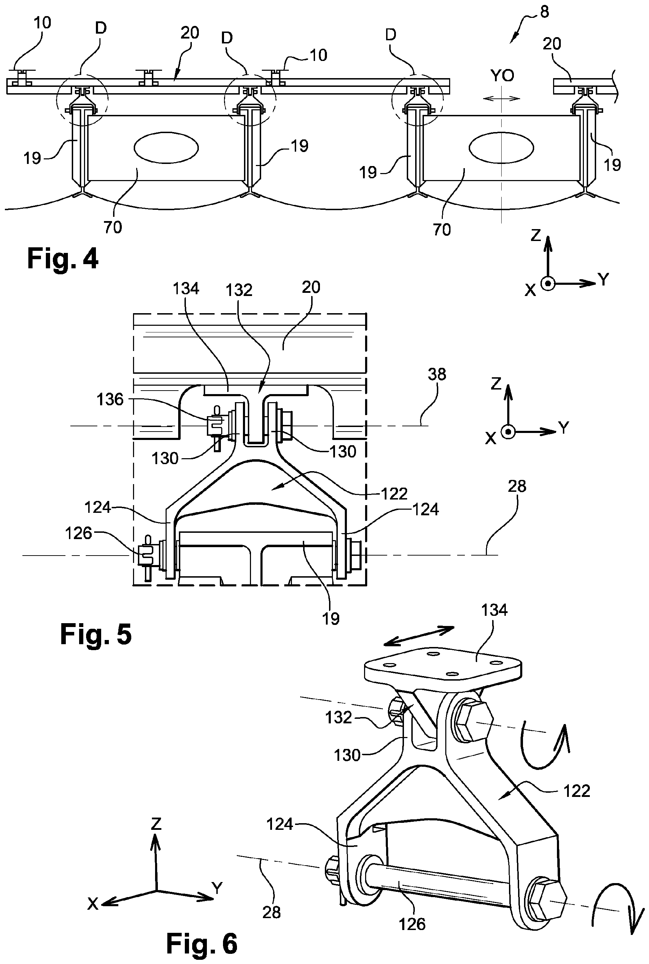

Nous allons maintenant présenter en référence aux figures 4 à 6 un premier mode détaillé de réalisation de l'agencement de la figure 2. Nous allons décrire l'agencement de ce mode et des suivants en considérant que la poutre est un tronçon 19 de portique. Il en irait cependant de même s'il s'agissait d'une poutre 14.

Chacune des traverses 20 présente une liaison mécanique à chacune des poutres 19 sur lesquelles elle repose, qui est constituée comme suit. La liaison comprend une pièce intermédiaire 122 qui est en l'espèce une fourchette. La partie inférieure de la fourchette a une forme de "U" ou de "V" renversé de sorte qu'elle forme deux branches 124 qui s'étendent respectivement en regard de deux faces principales opposées du tronçon 19.

La liaison comprend un arbre 126 qui traverse le tronçon 19 et les deux branches 124 pour former une articulation entre le tronçon 19 et la fourchette 122 autour d'un axe 28 parallèle à la direction transversale Y. L'extrémité supérieure de la fourchette 122 se divise également en deux branches 130 bien que sa largeur suivant la direction transversale Y soit très inférieure à celle de l'extrémité inférieure de la fourchette. Les deux branches 130 s'étendent de part et d'autre de l'extrémité inférieure d'une chape 132 comprenant une semelle supérieure 134 fixée rigidement à une paroi horizontale de la traverse 20, s'étendant environ à mi-hauteur de la traverse. Un arbre 136 traverse les deux branches 130 et la chape 132 pour constituer entre ces deux pièces une articulation autour d'un axe 38 parallèle lui aussi à la direction transversale Y. Les deux axes de rotation 28 et 38 permettent à la chape 132 de se déplacer par rapport à la poutre 19 associée suivant la direction longitudinale X. On a illustré dans la partie droite de la figure 4 la section Y0 qui correspond au plan de symétrie longitudinal vertical médian du fuselage.

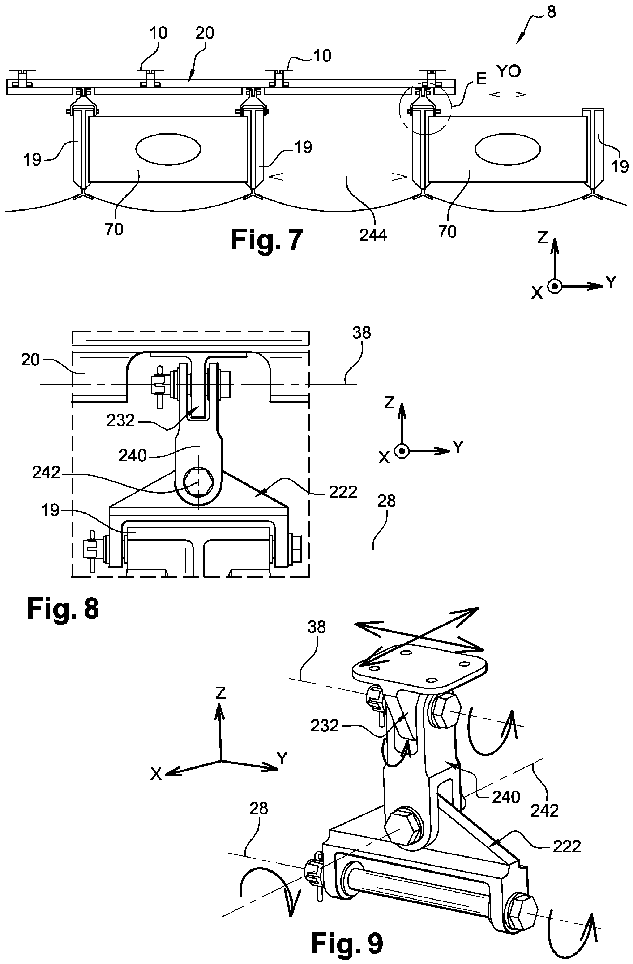

Le deuxième mode de réalisation illustré aux figures 7 à 9 présente une version plus élaborée de la liaison entre chaque traverse et chacun des portiques qui la supportent. On retrouve la fourchette 222 qui présente une extrémité inférieure fixée à la poutre 19 du portique de la même façon que dans le premier mode de réalisation en définissant une articulation d'axe 28. Toutefois, cette fois, la fourchette n'est pas directement reliée à la chape 232. La liaison comprend en effet, dans ce mode de réalisation, une pièce intermédiaire formée en l'espèce par une biellette 240. La biellette présente une extrémité inférieure articulée à l'extrémité supérieure de la fourchette 222 pour définir une articulation ou pivot d'axe 242 parallèle à la direction longitudinale X. La biellette 240 présente une extrémité supérieure articulée à la chape 232 de la même façon que la fourchette 122 était articulée à la chape 132 dans le premier mode de réalisation. La biellette y forme donc une articulation autour d'un axe 38 parallèle à la direction transversale Y. En outre, la biellette 240 est articulée à la chape 232 au moyen d'une liaison rotule située par exemple entre l'arbre de l'axe 38 et la chape.

Dans ce second mode de réalisation, les deux axes 28 et 38 permettent toujours un déplacement de la chape 232 par rapport à la poutre 19 suivant la direction longitudinale X. Mais dans cet agencement, la biellette 240 permet en outre un déplacement de la chape 232 suivant la direction transversale Y par rapport à la poutre 19 ainsi que sa rotation autour de l'axe X. Cet agencement permet à la mini-traverse de se déplacer suivant la direction transversale Y, parallèlement au talon supérieur du portique. Ainsi, lorsque la pression dans la cabine engendre un effet dit d'accordéon ou encore lorsqu'il se produit certains déplacements au niveau du caisson de voilure, il est possible aux poutres 19 des portiques situés dessous de se rapprocher les unes des autres suivant la direction Y, comme indiqué par la flèche 244 à la figure 7. On autorise également un déplacement angulaire autour de l'axe X du portique 19 par rapport à la mini-traverse 20 (et réciproquement). En effet, la liaison rotule autorise des déplacements angulaires de la chape par rapport à la poutre 19 autour de l'axe X. L'ensemble de cette liaison assure un centrage des efforts sur le portique 18, 19 et prévient la transmission depuis les portiques 18, 19 jusqu'aux traverses 20 des efforts qui ont tendance à déformer les portiques en les faisant pivoter autour de l'axe X et en les rapprochant les uns des autres.

Nous allons maintenant présenter un troisième mode de réalisation qui est proche dans son esprit du premier mode précité mais qui présente un encombrement réduit par rapport à ce dernier. Dans ce mode de réalisation, la fourchette est scindée en deux pièces 322 distinctes et distantes l'une de l'autre, qui sont en l'espèce des manilles. Chaque manille 322 a une forme proche de celle d'une biellette, généralement plate et plane dans le plan XZ, l'épaisseur de la manille s'étendant suivant la direction transversale Y. Chacune des deux manilles 322 présente un orifice inférieur 350 coïncidant avec un orifice supérieur 352 de la poutre 19 du portique. Les trois orifices 350 et 352 sont traversés par un arbre commun non représenté matérialisant l'axe 28.

Chacune des deux manilles présente en outre un orifice supérieur 354. La chape 332 a un profil en forme générale de "U" renversé définissant deux branches 356 qui présentent chacune un orifice 358. Les quatre orifices 354 et 358 sont coaxiaux et reçoivent une arbre commun définissant l'axe 38. Une entretoise cylindrique 360 est ajoutée entre les deux manilles, coaxialement aux orifices 354, cette entretoise étant traversée par l'arbre. Elle assure le maintien d'un espacement correct entre les deux manilles à ce niveau. Les deux manilles étant mobiles autour des deux mêmes axes de rotation 28 et 38, elles se trouvent immobiles l'une par rapport à l'autre et rigidement fixées indirectement l'une à l'autre.

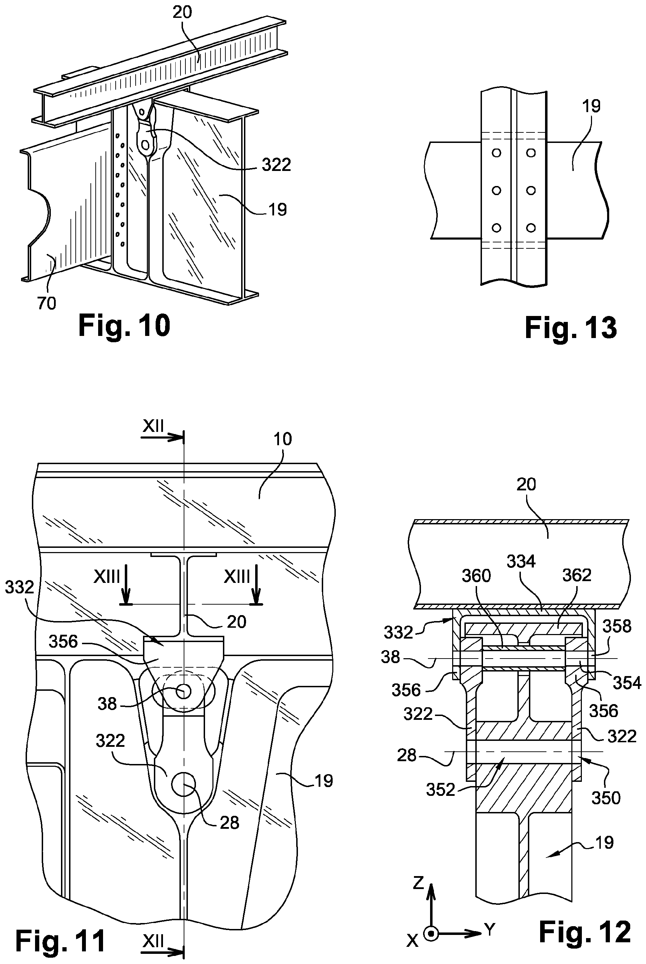

La semelle 334, formant la base du "U" au sommet de la chape, est comme précédemment fixée rigidement à la traverse 20, en l'espèce à sa paroi inférieure. Six points de fixation sont ici prévus comme illustré à la figure 13, ce nombre n'étant pas limitatif.

Les deux manilles 322 s'étendent tout entières en regard des faces respectives opposées de la poutre 19 et sous sa paroi supérieure 362 qui en forme le sommet, en particulier sous les faces supérieure et inférieure de cette paroi. Les deux axes 28 et 38 s'étendent donc eux aussi sous les deux faces de cette paroi. Les deux branches 356 de la chape 332 descendent en regard des champs de la paroi 362 et des faces latérales externes des extrémités supérieures des manilles respectives. La face inférieure de la semelle 334 s'étend en regard de la paroi 362 parallèlement à cette dernière, un espace libre étant ménagé entre les deux.

Comme on le voit, le remplacement de la fourchette 122 par deux pièces 322 permet de disposer les deux axes 28 et 38 au niveau du portique 19 et de réduire l'encombrement en hauteur de la liaison entre le portique et la traverse.

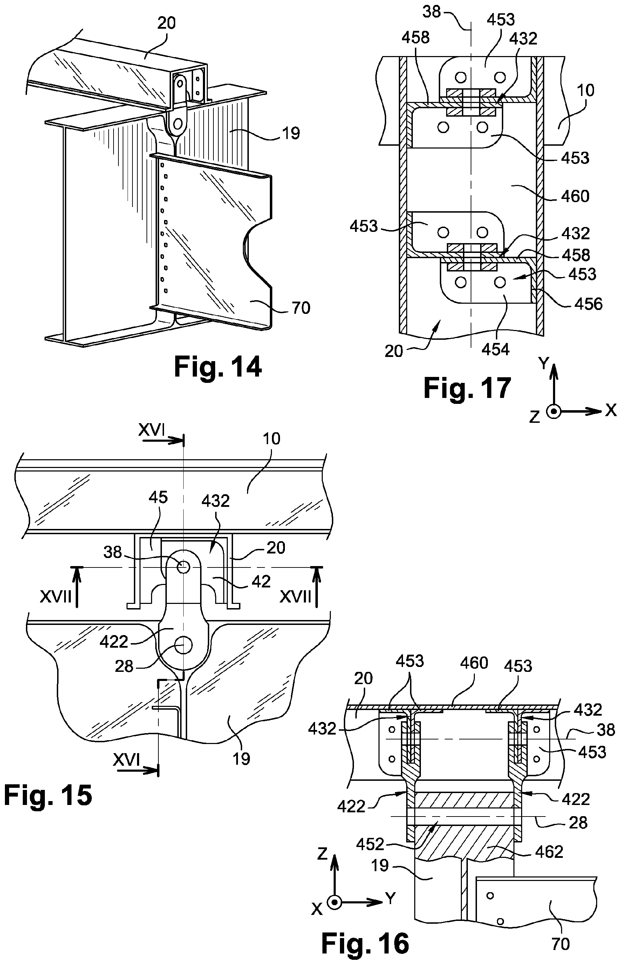

Enfin, on va décrire en référence aux figures 14 à 16 un quatrième mode de réalisation de cette liaison.

Dans ce mode de réalisation, l'orifice 452 de la poutre 19 est réalisé dans sa paroi supérieure 462 en se trouvant toutefois à distance de la face supérieure de cette paroi. Seule la partie inférieure de chaque manille 422 s'étend en regard de la face latérale correspondante du tronçon 19 puisque les manilles dépassent cette fois au-dessus du tronçon.

La chape unique des trois premiers modes est cette fois remplacée par deux chapes 432 distinctes et distantes l'une de l'autre, associées aux manilles respectives 422. De plus, l'extrémité supérieure de chaque manille a cette fois une forme de fourche dans laquelle est insérée l'extrémité inférieure de chaque chape 432. Les deux orifices supérieurs de chaque manille et l'orifice de chaque chape sont tous les six coaxiaux pour recevoir un ou deux arbres communs définissant l'axe 38.

En outre, dans ce mode de réalisation, la traverse 10 présente une section ouverte vers le bas. Il pourrait s'agir d'une section en forme de "U" renversé mais il s'agit en l'espèce d'une section en forme de "Ω". La semelle supérieure de chacune des chapes 432 est fixée directement à la paroi supérieure 460 formant le sommet de la traverse 20, contre sa face interne. On comprend donc que les chapes 432 s'étendent sous cette paroi 460. Elles s'étendent à l'intérieur de la section de la traverse 20 en regard des faces internes de cette dernière. Les manilles 422 s'étendent sous les chapes et la poutre 19 s'étend sous les chapes et en partie sous les manilles.

Chacune des deux chapes 432 est en l'espèce elle-même formée par deux pièces 453 identiques entre elles. Chacune des pièces 453 est constituée de trois parois respectivement perpendiculaires aux directions X, Y et Z et formant une cornière en générant un coin saillant. La paroi horizontale 454 est en contact surfacique avec la paroi supérieure 460 de la traverse 20. La paroi 456 s'étend dans le plan YZ et est fixée rigidement à l'un des flancs verticaux de la traverse 20. La troisième paroi 458 est parallèle au plan XZ et est fixée à la paroi homologue 458 de l'autre pièce 453 formant la même chape de sorte qu'elles forment ensemble la partie inférieure de la chape reçue dans la manille associée.

Les deux pièces 453 formant une même chape 432 sont fixées à la paroi 460 et aux flancs latéraux respectifs de la traverse. Elles sont disposées pour être l'image l'une de l'autre par une rotation de 180° autour de l'axe Z. En revanche, les deux chapes 432 sont disposées pour être l'image l'une de l'autre par une symétrie par rapport à un plan parallèle aux directions X, Z et situé à mi-distance des deux chapes. Ce mode de réalisation des chapes permet de leur donner des formes complexes à partir d'une même pièce de forme simple utilisée en quatre exemplaires.

Ainsi, la liaison s'étend à l'intérieur de la traverse et sous celle-ci, mais en aucune façon au-dessus de cette dernière. Ce mode de réalisation permet de gagner de l'espace en logeant la liaison en partie à l'intérieur de la mini-traverse 20. Il s'agit d'une solution particulièrement simple, légère et économique. Cette solution permet par exemple de conserver pour la poutre 19 une hauteur de 340 mm qui est une hauteur préférée compte tenu de la présence des roues du train d'atterrissage au-dessous et du plancher de la cabine au-dessus. La section ouverte en "Ω" présente autant d'inertie autour de l'axe X qu'une section en "I" et suffisamment d'inertie autour de l'axe Z pour reprendre une contrainte de cisaillement entre les rails. Cette simplification de la fixation des traverses aux portiques permet en retour de fixer des voiles de stabilisation 70 illustrés aux figures 3 et 4 au voisinage de la liaison et en particulier dans le prolongement vertical de cette dernière, sous celle-ci. Un tel agencement des voiles a pour avantage de réduire l'usinage à effectuer ainsi que la masse des portiques.

Naturellement, les troisième et quatrième modes de réalisation n'entravent pas les fonctionnalités de déplacement qui ont été présentées plus généralement aux premier et deuxième modes de réalisation. En outre, chacun des quatre modes de réalisation ne pose pas de problème de fatigue au niveau des pièces de la structure du fuselage.

Bien entendu, on pourra apporter à l'invention de nombreuses modifications sans sortir du cadre de celle-ci. On pourra prévoir des mini-traverses dans d'autres zones de l'aéronef que le caisson central de voilure et la case de train d'atterrissage principal.

## Revendications

1. Aéronef (2) comprenant des rails (10) de support de sièges (12), les rails étant parallèles à une direction longitudinale (X) de l'aéronef ; des poutres (14, 19) parallèles aux rails ; et des traverses (20), au moins deux des traverses (20) étant alignées suivant une direction longitudinale (Y) des traverses, chaque traverse supportant certains seulement des rails (10) qui se succèdent suivant la direction (Y) de la traverse, chaque traverse étant supportée par certaines seulement des poutres (14, 19) qui se succèdent suivant la direction de la traverse, les poutres faisant partie d'un caisson central de voilure (6) et/ou d'une case de train principal (8) de l'aéronef **caractérisé en ce que** chaque traverse (20) présente une liaison à chacune des poutres (14, 19) qui la supporte, la ou chaque liaison comprenant au moins une articulation autour d'au moins un axe (28, 38 ;242).

2. Aéronef selon la revendication 1 dans lequel la liaison comprend au moins une articulation autour d'un axe (28, 38) parallèle à la direction (Y) de la traverse.

3. Aéronef selon la revendication 1 ou 2 dans lequel la liaison comprend deux articulations autour de deux axes (28, 38) respectifs parallèles à la direction (Y) de la traverse.

4. Aéronef selon l'une quelconque des revendications précédentes dans lequel la liaison comprend au moins une articulation autour d'un axe (242) parallèle à la direction longitudinale (X) de l'aéronef.

5. Aéronef selon au moins l'une quelconque des revendications précédentes dans lequel la liaison est agencée de sorte que le ou les axes (28, 38) s'étendent sous une face supérieure de la poutre (14, 19).

6. Aéronef selon au moins l'une quelconque des revendications précédentes dans lequel la liaison comprend un lien rotulé.

7. Aéronef selon au moins l'une quelconque des revendications précédentes dans lequel la liaison est agencée de sorte que la traverse (20) est reliée à la poutre (14, 19) par l'intermédiaire d'une paroi supérieure (460) de la traverse, la liaison s'étendant à l'intérieur de la traverse.

8. Aéronef selon au moins l'une quelconque des revendications précédentes dans lequel la liaison comprend deux pièces intermédiaires (322 ; 422) s'étendant respectivement en regard de faces opposées respectives de la poutre (14, 19) et rigidement fixées l'une à l'autre au moyen de deux articulations.

## Patentansprüche

1. Luftfahrzeug (2), welches Schienen (10) zur Halterung von Sitzen (12), wobei die Schienen zu einer Längsrichtung (X) des Luftfahrzeugs parallel sind; Träger (14, 19), die zu den Schienen parallel sind; und Querträger (20) umfasst, wobei wenigstens zwei der Querträger (20) entlang einer Längsrichtung (Y) der Querträger ausgerichtet sind, wobei jeder Querträger nur einige der Schienen (10) stützt, welche entlang der Richtung (Y) des Querträgers aufeinander folgen, wobei jeder Querträger nur von einigen der Träger (14, 19) gestützt wird, die entlang der Richtung des Querträgers aufeinander folgen, wobei die Träger Teil eines Flügelmittelkastens (6) und/oder eines Hauptfahrwerkschachtes (8) des Luftfahrzeugs sind, **dadurch gekennzeichnet, dass** jeder Querträger (20) eine Verbindung mit jedem der Träger (14, 19), welche ihn stützen, aufweist, wobei die oder jede Verbindung wenigstens eine Gelenkverbindung um wenigstens eine Achse (28, 38; 242) umfasst.

2. Luftfahrzeug nach Anspruch 1, wobei die Verbindung wenigstens eine Gelenkverbindung um eine Achse (28, 38) umfasst, die zur Richtung (Y) des Querträgers parallel ist.

3. Luftfahrzeug nach Anspruch 1 oder 2, wobei die Verbindung zwei Gelenkverbindungen um zwei jeweilige Achsen (28, 38) umfasst, die zur Richtung (Y) des Querträgers parallel sind.

4. Luftfahrzeug nach einem der vorhergehenden Ansprüche, wobei die Verbindung wenigstens eine Gelenkverbindung um eine Achse (242) umfasst, die zur Längsrichtung (X) des Luftfahrzeugs parallel ist.

5. Luftfahrzeug nach einem der vorhergehenden Ansprüche, wobei die Verbindung so ausgebildet ist, dass die Achse oder die Achsen (28, 38) sich unter einer Oberseite des Trägers (14, 19) erstrecken.

6. Luftfahrzeug nach wenigstens einem der vorhergehenden Ansprüche, wobei die Verbindung ein Kugelgelenkglied umfasst.

7. Luftfahrzeug nach wenigstens einem der vorhergehenden Ansprüche, wobei die Verbindung so ausgebildet ist, dass der Querträger (20) mit dem Träger (14, 19) über eine obere Wand (460) des Querträgers verbunden ist, wobei sich die Verbindung im Inneren des Querträgers erstreckt.

8. Luftfahrzeug nach wenigstens einem der vorhergehenden Ansprüche, wobei die Verbindung zwei Zwischenstücke (322; 422) umfasst, die sich jeweils gegenüber von jeweiligen gegenüberliegenden Seiten des Trägers (14, 19) erstrecken und mittels zweier Gelenkverbindungen starr aneinander befestigt sind.

## Claims

1. Aircraft (2) comprising rails (10) for supporting seats (12), the rails being parallel to a longitudinal direction (X) of the aircraft; beams (14, 19) parallel to the rails; and crossbeams (20), at least two of the crossbeams (20) being aligned in a longitudinal direction (Y) of the crossbeams, each crossbeam supporting just some of the rails (10) which follow one another in the direction (Y) of the crossbeam, each crossbeam being supported by just some of the beams (14, 19) which follow one another in the direction of the crossbeam, the beams forming part of a central wing box (6) and/or of a main landing gear bay (8) of the aircraft, **characterized in that** each crossbeam (20) has a connection to each of the beams (14, 19) that supports it, the or each connection comprising at least one articulation about at least one axis (28, 38; 242).

2. Aircraft according to Claim 1, in which the connection comprises at least one articulation about an axis (28, 38) parallel to the direction (Y) of the crossbeam.

3. Aircraft according to Claim 1 or 2, in which the connection comprises two articulations about two respective axes (28, 38) which are parallel to the direction (Y) of the crossbeam.

4. Aircraft according to any one of the preceding claims, in which the connection comprises at least one articulation about an axis (242) parallel to the longitudinal direction (X) of the aircraft.

5. Aircraft according to any one of the preceding claims, in which the connection is arranged in such a way that the axis or axes (28, 38) extend under an upper face of the beam (14, 19).

6. Aircraft according to at least any one of the preceding claims in which the connection comprises a ball-jointed connection.

7. Aircraft according to at least any one of the preceding claims, in which the connection is arranged in such a way that the crossbeam (20) is connected to the beam (14, 19) by means of an upper wall (460) of the crossbeam, the connection extending into the crossbeam.

8. Aircraft according to at least any one of the preceding claims, in which the connection comprises two intermediate components (322; 422) respectively extending to face opposite respective faces of the beam (14, 19) and rigidly fixed to one another by means of two articulations.
